# EUROPEAN PATENT APPLICATION

(11) **EP 1 914 858 A2**
(43) Date of publication of application: **23.04.2008**
(21) Application number: 07018507.9
(22) Date of filing: 20.09.2007
(51) Int. Cl.: H02J 5/00, G01R 31/28

(54) **Non-contact electricity feeding facility**

(30) Priority: 17.10.2006 JP 2006282165
(71) Applicant: Murata Machinery, Ltd., Minami-ku Kyoto-shi Kyoto 601-8326 (JP)
(72) Inventor: Mitsuhashi, Hiroaki, Inuyama-shi Aichi (JP); Hashimoto, Hiroyuki, Inuyama-shi Aichi (JP)
(74) Representative: Liedl, Christine

(57) **Abstract**

An object of the present invention is to provide a non-contact electricity feeding facility that feeds electricity to a rail guided vehicle in a non-contact manner, the facility enabling a temperature abnormality in a feeding cable to be reliably detected using a simple configuration. The present invention provides a non-contact electricity feeding facility 7 that feeds electricity to a rail guided vehicle 5 in a non-contact manner, the facility including a thermostat 43 mounted at an end of the feeding cable 9 at a connection between a feeding cable 9 and a bus bar 12 for junction or termination which is required for feeding electricity, the thermostat 43 operating at at least a predetermined temperature, and a temperature abnormality detecting circuit 44 that detects that the thermostat 43 has operated (Fig. 4).

## Description

### Field of the Invention

The present invention relates to a non-contact electricity feeding facility that feeds electricity to a rail guided vehicle via a feeding cable laid along a traveling track, and in particular, to a technique for detecting an abnormal increase in the temperature of the feeding cable.

### Background of the Invention

In a rail guided vehicle system as automatic conveying means for conveying articles in a factory or a warehouse, an automatic guided vehicle travels on a track laid along a conveyance path. Types for feeding electricity to the conveying vehicle in the rail guided vehicle system are classified into a contact type and a non-contact type. The non-contact type is adopted for a system installed in a clean room or the like which requires the prevention of dusting.

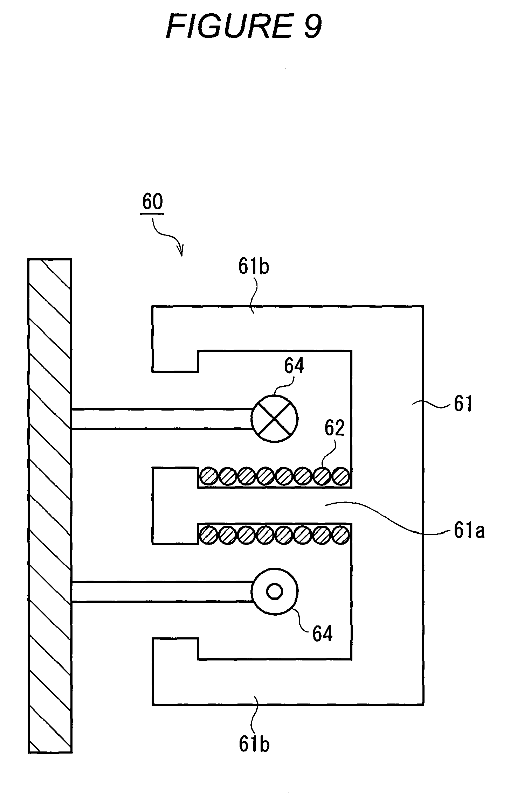

According to the non-contact electricity feeding scheme, a pair of cables is laid along the track so that the cables extend parallel to each other with a predetermined distance maintained between the cables. The tips of the cables are short-circuited and looped, and a high frequency current is passed from the open end side of the cable pair. On the other hand, an electricity receiving unit 60 having a three-leg magnetic core 61 having an E-shaped cross section as shown in Figure 9 is mounted on the conveying vehicle side. A secondary coil 62 is wound around a center leg 61a of the three-leg magnetic core 61, and one feeding cable 64 is passed through the gap between the center leg 61a and each of two outer legs 61b of the three-leg magnetic core 61 (see the Unexamined Japanese Patent Application Publication (Tokkai) No. 2002-165302). This configuration allows the electricity receiving unit 60 to function as a transformer having, as a one-turn primary winding, the feeding cables 64 constituting a closed loop, and the secondary coil 62 as a secondary winding. Passing a high frequency current through the feeding cables 64, the primary winding, allows a current to flow through the secondary coil 62 as a result of mutual induction. The current is rectified to obtain a direct current. The direct current obtained is converted by an inverter into an alternating current, which is then supplied to a motor. The alternating current is thus used as a power source to move the vehicle.

Power supplied by non-contact electricity feeding drives the motor and has a great value. Electricity feeding such high power requires that a large current flow through the feeding cable. Further, in order to reduce the size of the three-leg magnetic core 61, the power is supplied using a high frequency current of about 10 kHz. The high frequency current flows largely through the vicinity of a front layer in the conductor owing to a skin effect. This increases the effective resistance and effective self-inductance of the conductor. To prevent this, a Litz wire is used as a feeding cable; the Litz wire is formed by twisting a large number of thin enamel wires together so as to increase the surface area of the resulting wire. To ensure a required current capacity, a bundle of several Litz wires is used as the single feeding cable.

Ends of the Litz wires are subjected to a termination process using crimping terminals and fixed, with screws, to a bus bar, terminal block, or the like which is required for feeding electricity. A large number of connections are subjected to such a termination process and fixation with screws. For example, the ends of the Litz wires, to which a high frequency current is input, are connected to an output bus bar in a power supply device. Further, where a significantly long feeding cable is required, shorter feeding cables are joined together at a position corresponding to the middle of the resulting long feeding cable. A bus bar or a terminal block is used for the junction, and the Litz wire end is subjected to a termination process and fixed to the bus bar or terminal block with screws. Moreover, capacitors may be interposed in the middle of the feeding cable in series at regular intervals in order to compensate for the self-inductance of the feeding cable. The capacitors are connected between the two bus bars mounted in a junction box. The Litz wire end is subjected to a termination process and fixed to the bus bars with screws.

A large current flows through the feeding cable as described above. Consequently, where any of the screws fixing the crimping terminals installed at the Litz wire end to the bus bar slackens, contact resistance increases to generate heat. Further, each of the wires in the Litz wire is insulated by enamel. Thus, to install the crimping terminals, the enamel needs to be removed over a given width in order to ensure the electric connection between the wires in the Litz wire and the crimping terminal. Insufficient removal prevents current from flowing through the wires in the Litz wire from which the enamel has not been removed. The corresponding current flows through the other wires in the Litz wire to generate heat in the wires. The generated heat causes an abnormal increase in the temperature of the feeding cable or the screw clamp portions, resulting in inappropriate insulation. This may lead to a defect, and in the worst case, fire may occur. Thus, measures need to be taken to detect a temperature abnormality.

For example, a method disclosed in the Examined Japanese Patent Application Publication (Tokko-Sho) No. 60-050308 is a conventional technique for detecting an abnormal temperature in the feeding cable, connection, or the like for the non-contact electricity feeding described above. According to the method, a heat detecting wire is laid in a predetermined area; the heat detecting wire is composed of a pair of heat detection wires and a non-heat-detection wire coated with rubber, cross-linking polyethylene, or the like and placed along the heat sensing wires. Furthermore, one end of the non-heat-detection wire is connected to one end of one of the heat detection wires. The other ends of the non-heat detection wire and heat detection wire are connected to two terminals on a Murray loop. Moreover, the other heat detection wire is connected to a power source via an alarm device.

Where abnormal heat generation occurs in this state, the coating of the heat detection wire is melted to cause wire-to-wire short-circuiting, activating the alarm device. In this case, the abnormal site can be located by operating the Murray loop. However, with this method, where the abnormal heat generation melts the coating to cause short-circuiting, a new heat detecting wire disadvantageously needs to be laid again.

The present invention has been made to solve the problems with the prior art. An object of the present invention is to provide a non-contact electricity feeding facility that feeds electricity to a rail guided vehicle in a non-contact manner via a feeding cable laid along a traveling track, the facility enabling an abnormal increase in the temperature of the feeding cable to be reliably detected using a simple configuration.

### Summary of the Invention

To accomplish the object, the invention set forth in Claim 1 provides a non-contact electricity feeding facility that feeds electricity to a rail guided vehicle in a non-contact manner via a feeding cable laid along a traveling track, the facility being characterized by comprising a thermostat mounted at an end of the feeding cable at a connection between the feeding cable and a bus bar for junction or termination which is required for feeding electricity, the thermostat operating at at least a predetermined temperature, and a temperature abnormality detecting circuit that detects that the thermostat has operated.

An abnormal increase in temperature is likely to occur in the vicinity of the connection between the feeding cable and the bus bar for junction or termination. Further, where the cable wire is partly broken in the middle of the feeding cable, the entire cable generates heat. Consequently, the feeding cable end can be monitored for an increase in temperature. Thus, mounting the thermostat at the feeding cable end enables the entire feeding cable to be monitored for an increase in temperature using a small number of thermostats. Furthermore, the thermostat performs a reversible operation, advantageously allowing repeated detections.

Further, the invention set forth in Claim 2 corresponds to the non-contact electricity feeding facility according to Claim 1, characterized in that the thermostat operating at at least the predetermined temperature is also mounted on a bus bar side to which the feeding cable is connected.

An abnormal increase in temperature is likely to occur in the vicinity of the connection between the feeding cable and the bus bar for junction or termination.

In particular, where any of the screws fixing the feeding cable to the bus bar slackens, contact resistance may increase to generate heat, increasing the temperature of the vicinity of the screw clamp portion. Therefore, also mounting the thermostat on the bus bar side as in the case of the present configuration allows an abnormality in the cable connection to be detected earlier.

The invention set forth in Claim 3 corresponds to the non-contact electricity feeding facility according to Claim 1 or 2, characterized in that the thermostat used is of a type that performs power interrupting operation at at least the predetermined temperature and a plurality of the thermostats are mounted by being connected together in series, and in that the facility has a temperature abnormality detecting circuit that detects that at least one of the thermostats has performed the power interrupting operation.

Thus mounting the plurality of thermostats enables the temperature to be monitored over a wide range. Further, connecting the plurality of thermostats in series enables a reduction in the number of wires between the thermostats and the temperature abnormality detecting circuit. This is also effective for simplifying the configuration of the temperature abnormality detecting circuit.

The invention set forth in Claim 4 corresponds to the non-contact electricity feeding facility according to any one of Claims 1 to 3, characterized in that the temperature abnormality detecting circuit comprises a circuit that holds information indicating that any of the thermostats has operated.

Providing the circuit that holds the information indicating that any of the thermostats has operated is effective for determining that temperature abnormality has occurred and locating the site of the temperature abnormality even after the portion in which the abnormal increase in temperature occurred has been returned to the normal temperature by stopping feeding electricity.

Other features, elements, processes, steps, characteristics and advantages of the present invention will become more apparent from the following detailed description of preferred embodiments of the present invention with reference to the attached drawings.

### Brief Description of the Drawings

Figure 1 is an example of a general layout of a rail guided vehicle system 1 in accordance with the present invention.
Figure 2 is a diagram showing a configuration of a conveyor vehicle 5 as viewed from a traveling direction.
Figure 3 is a diagram showing a configuration of an electricity receiving unit 10.
Figure 4 is a diagram showing how a temperature sensor is mounted in the vicinity of the connection between an output bus bar 12 in a power supply device 8 and a feeding cable 9.
Figure 5 is a diagram showing how the temperature sensor is mounted in the vicinity of an area in which the two feeding cables 9 are joined and connected together using the bus bar 12.
Figure 6 is a diagram showing how the temperature sensor is mounted in the vicinity of an area in which capacitors 39 are connected in series in the middle of the feeding cable 9.
Figure 7 shows an example of a configuration of a temperature abnormality detecting circuit 44.
Figure 8 shows another example of the configuration of the temperature abnormality detecting circuit 44.
Figure 9 is a diagram equivalent to Figure 3, showing a conventional technique.

### Detailed Description of the Preferred Embodiments

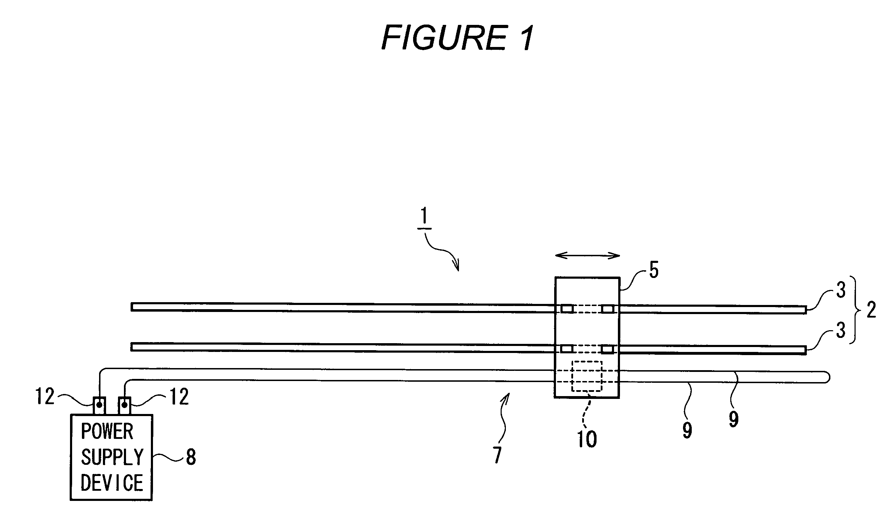

An embodiment of a non-contact electricity feeding facility in accordance with the present invention will be described with reference to the drawings. Figure 1 shows an example of a general layout of a rail guided vehicle system 1 that is automatically guided by receiving a non-contact electricity feeding. A traveling track 2 in accordance with the present embodiment is composed of two linear parallel rails 3 on which a conveyor vehicle 5 travels linearly to convey articles among article loading and unloading stations (not shown in the drawings).

The non-contact electricity feeding facility 7 is composed of a power supply device 8, two feeding cables 9, and an electricity receiving unit 10. The two feeding cables 9 are laid along the traveling track. One end of the two feeding cables 9 is short-circuited so as to constitute a one-turn coil. The other end of the feeding cables 9 is connected to an output bus bar 12. The power supply device 8 is a device that generates a high frequency current of about 10 kHz. The power supply device 8 supplies a generated high frequency current to the feeding cables 9, constituting the one-turn coil. The electricity receiving unit 10 is mounted in the conveyor vehicle 5 to receive power from the high frequency current flowing through the feeding cable 9 in a non-contact manner. The structure of the electricity receiving unit 10 will be described below in detail.

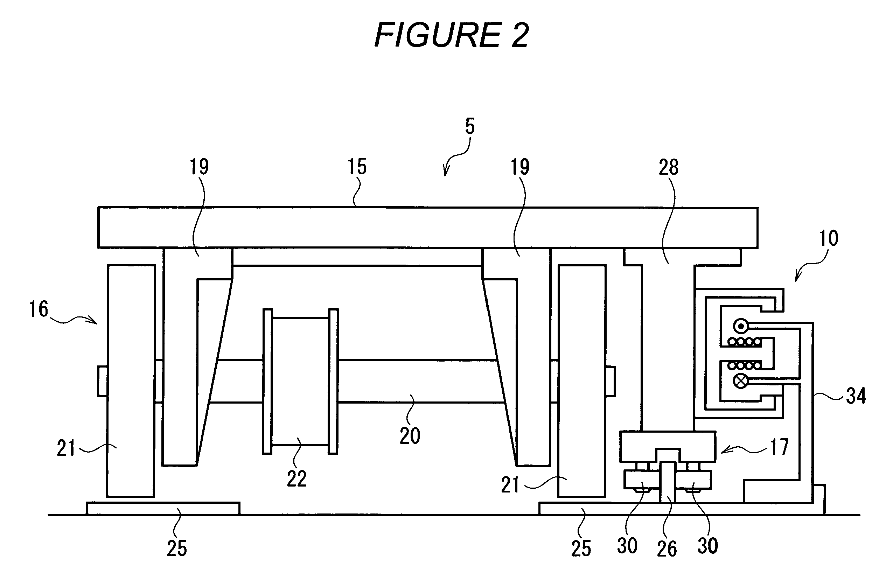

Figure 2 is a diagram showing the configuration of the conveyor vehicle 5 as viewed from a traveling direction. The conveyor vehicle 5 comprises a base 15, a traveling mechanism 16, a guide mechanism 17, and the electricity receiving unit 10. The base 15 is a portion on which articles are placed. The traveling mechanism 16 is a mechanism that allows the conveyor vehicle 5 to travel. The traveling mechanism 16 is composed of a wheel support frame 19 mounted under the base 15, two rotating shafts 20 rotatably mounted to the wheel support frame 19, traveling wheels 21 mounted at the respective ends of each of the rotating wheels 20, and a motor 22 with a speed reducer which drives the rotating shafts 20. The motor 22 is driven by power received by non-contact electricity feeding to rotate the traveling wheels 21. This allows the conveyor vehicle 5 to travel forward and backward on rails 25 laid on a floor.

The guide mechanism 17 is a mechanism that prevents the conveyor vehicle 5 from being displaced in a lateral direction during traveling. A guide rail 26 is mounted on one of the rails 25. The guide mechanism 17 has a guide roller support frame 28 that hangs from an underside of the base 15, and guide rollers 30 mounted to the guide roller support frame 28 so as to be rotatable in a horizontal direction. The guide rollers 30 roll in contact with respective side surfaces of the guide rail 26. The guide rollers 30 roll independently across the guide rail 26 to prevent the conveyor vehicle 5 from vibrating sideways or deviating from the track.

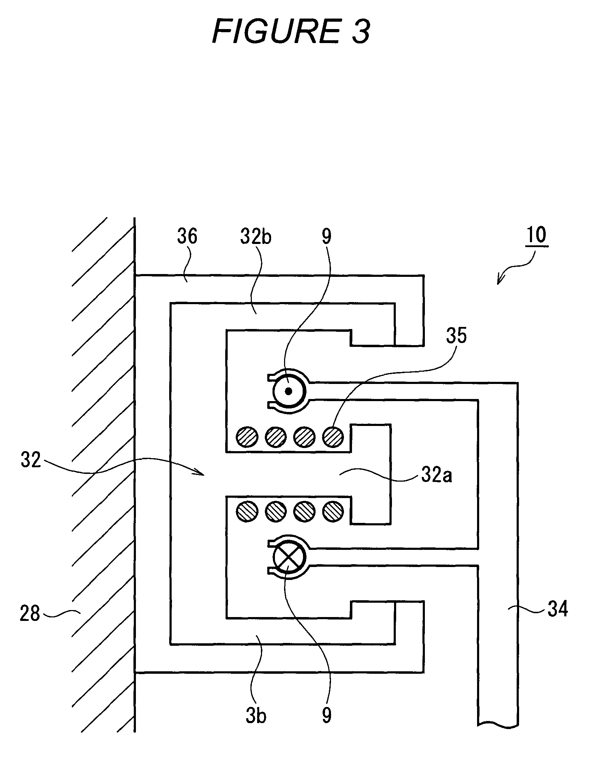

The electricity receiving unit 10 is mounted on an outer side surface of the guide roller support frame 28. Figure 3 shows the configuration of the electricity receiving unit 10. The electricity receiving unit 10 is configured as a core type transformer having a primary winding and a secondary winding which are concentrically wound. A part of the electricity receiving unit 10 which corresponds to a core is composed of a three-leg magnetic core 32 having an E-shaped cross section. The three-leg magnetic core 32 is formed of a material such as ferrite which offers a high permeability and a high resistance. The secondary winding 35 is wound around a center leg 32a. Each of the feeding cables 9 is passed through the gap between the outside of the secondary winding 35 and each outer leg 32b. The feeding cable 9 functions as a one-turn primary winding.

The feeding cable 9 is mounted in a cable support material 34 fixed to the rail 25. This prevents the possible deviation of the relative positional relationship between the feeding cable 9 and the three-leg magnetic core 32. The core needs to be partly open-circuit so that the cable support material 34 can be passed through the core. Thus, the magnetic core 32 has a three-leg structure having an E-shaped cross section. The three-leg magnetic core 32 is fixed to the guide roller support frame 28 so as to be held and protected by an outer frame 36.

The power supply device 8 supplies a high frequency current to the one-turn feeding cable 9, the primary winding, to generate an alternating magnetic flux in the three-leg magnetic core 32. The alternating magnetic flux excites a voltage in the secondary winding 35 to allow current to flow through a load connected to the secondary winding 35. The power supplied by the power supply device 8 is fed to the load on the secondary winding 35 in a non-contact manner under the transformer action described above. The conveyor vehicle 5 side rectifies and converts the resulting secondary current into a direct current, and thus DC power is obtained. The DC power is converted into AC power of a predetermined frequency by an inverter. The AC power is then supplied to the motor 22. In the rail guided vehicle system 1, shown in Figure 1, uses the non-contact electricity feeding facility 7, operating as described above, to feed electricity to the conveyor vehicle 5.

The power fed by the non-contact electricity feeding facility 7 is used to drive the motor 22 and has a great value. The power is supplied, through the feeding cable 9, the one-turn primary winding, to the receiving unit 10, acting as a transformer. Since the primary winding has only one turn, a large current needs to flow through the feeding cable 9 in order to deliver high power to the conveyor vehicle 5.

The large current flowing through the feeding cable 9 causes heat generation as a result of the resistance of the feeding cable 9. Where the heat generation excessively increases the temperature of the feeding cable 9, an insulating coating of the feeding cable 9 is melted. This may lead to inappropriate insulation, and in the worst case, fire may occur. The heat generation caused by the large current is likely to occur in the vicinity of the area in which the feeding cable 9 is fixed to the bus bar (including a terminal block; this also applies to the description below) with screws. Where any of the fixing screws is slackened by vibration, the contact resistance increases to cause significant heat generation.

Further, the current fed through the feeding cable 9 has a high frequency, and thus during the flow, concentrates in a front layer portion of the conductor owing to a skin effect. The concentration of current in the front layer portion of the conductor increases the effective resistance and effective self-inductance of the conductor. Thus, a Litz wire is used as the feeding cable 9; the Litz wire is formed by twisting a large number of thin enamel wires together so as to increase the surface area of the resulting wire. For a particularly large current flowing through the feeding cable 9, a bundle of several Litz wires is used as the feeding cable 9.

Where the Litz wires are connected to, for example, the bus bar, ends of the Litz wires are subjected to a termination process using crimping terminals and fixed to the bus bar with screws. Each of the wires in the Litz wire is insulated by enamel. Thus, to install the crimping terminals, the enamel needs to be removed over a given width in order to ensure the electric connection between the wires in the Litz wire and the crimping terminal. Insufficient removal prevents current from flowing through the wires in the Litz wire from which the enamel has not been removed. The corresponding current flows through the other conductor wires to generate heat in the feeding cable 9.

Thus, the heat generation caused by the flow of a large current through the feeding cable 9 is likely to occur in the area in which the feeding cable 9 is connected to the bus bar. Thus, the non-contact electricity feeding facility 7 in accordance with the present embodiment reliably detects a temperature abnormality in the vicinity of the connection between the Litz wires, constituting the feeding cable 9, and the bus bar. The resulting detection signal is transmitted to the power supply device 8 in order to prevent melting of the cable insulating coating and the occurrence of fire or allows the abnormal site to be located.

The non-contact electricity feeding facility 7 has a large number of connections at which the feeding cable 9 is fixed to the bus bar with screws. For example, the end of the feeding cable 9, to which a high frequency current is input, is connected to the output bus bar 12 in the power supply device 8. Further, where a significantly long feeding cable is required, shorter feeding cables are joined together at position corresponding to the middle of the resulting long feeding cable. The bus bar is used for the junction, and the Litz wire end is subjected to the termination process and fixed to the junction bus bar with screws. Moreover, capacitors may be interposed in the middle of the feeding cable in series at regular distances in order to compensate for the self-inductance of the feeding cable. The capacitors are connected between the two bus bars mounted in a junction box. The Litz wire end is subjected to the termination process and fixed to the bus bars with screws. A description will be given below of a method for detecting a temperature abnormality at the connections.

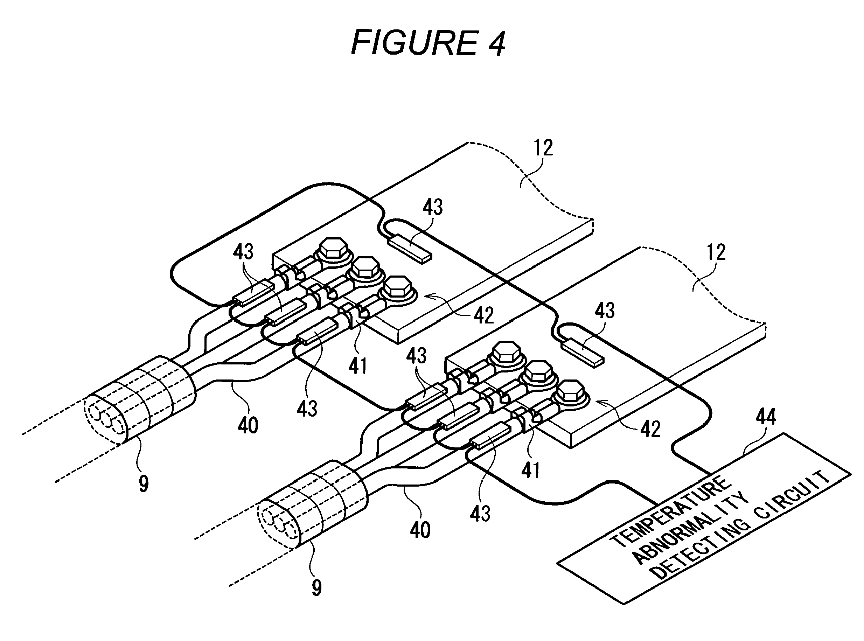

Figure 4 shows how the feeding cable 9 is connected to the output bus bar 12 in the power supply device 8 and how a temperature sensor is mounted which detects a temperature abnormality in the vicinity of the connection between the feeding cable 9 and the output bus bar 12. In the present embodiment, a bundle of three Litz wires 40 is used as the feeding cable 9. An outer insulating coating is removed from the end of each of the Litz wires 40 over a given width. The enamel layer is further removed from the wires in the part of the Litz wire 40 from which the coating has been removed. Then, a crimping terminal 41 is attached to each bundle of the bare wires in the Litz wire 40 by crimping. The crimping terminal 41 is connected to the output bus bar 12 by fixing the crimping terminal 41 to the output bus bar 12 with a screw.

Where a large current flows through the connection between the output bus bar 12 in the power supply device 8 and the feeding cable 9, described above, a temperature abnormality is likely to occur in a screw clamp portion 42 and in the Litz wire 40 for the above reason. Thus, in the present embodiment, a thermostat 43 as a temperature sensor is mounted at an end of each L i tz wire 40 which is closer to the crimping terminal 41. Moreover, to detect a temperature abnormality in the screw clamp portion 42, the thermostat 43 is also mounted at a position on each output bus bar 12 which is close to the screw clamp portion 42. The thermostat 43 is composed of a bimetal formed by laminating two types of metals having different expansion (contraction) coefficients based on a variation in temperature. An NC (Normal Close) contact that becomes nonconductive at at least a given temperature is used as the thermostat in accordance with the present embodiment. The thermostats 43 are connected together in series so as to input signals to the temperature abnormality detecting circuit 44 as shown in Figure 4. The configuration of the temperature abnormality detecting circuit 44 will be described later.

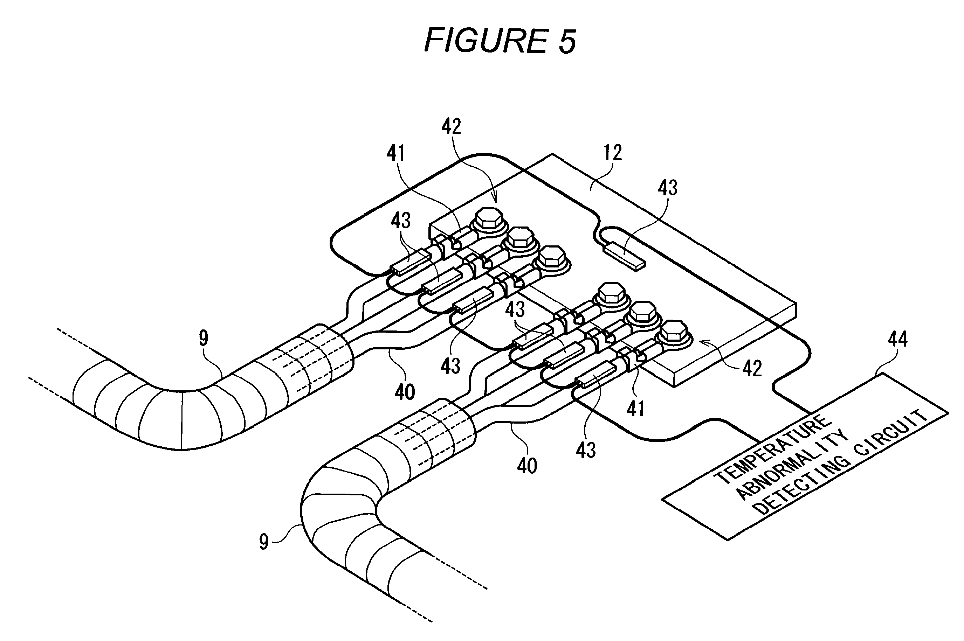

Figure 5 shows the case in which the output bus bar 12 is used to join and connect the two feeding cables 9 together; Figure 5 further shows how the feeding cables 9 are connected to the output bus bar 12 and how the temperature sensor is mounted which detects a temperature abnormality in the vicinity of the connection between the feeding cable 9 and the bus bar 12. The junction of the feeding cables 9 as shown in the figure is carried out where the feeding cables 9 need to be very long because of the long traveling track 2. With the joint connection, the Litz wires 40 constituting the feeding cable 9 are connected to the same output bus bar 12. The method for executing the termination process on each Litz wire 40 and the method for fixing the Litz wire 40 to the output bus bar 12 are the same as those in the case of Figure 10.

The portion in which a temperature abnormality is likely to occur is the same as that in Figure 4. Accordingly, also in the present embodiment, the thermostat 43 is mounted at the end of each Litz wire 40 which is closer to the crimping terminal 41 and at the position on each output bus bar 12 which is close to the screw clamp portion 42. The NC contact, which becomes nonconductive at at least the given temperature, is used as each of the thermostats 43. The thermostats 43 are connected together in series so as to input signals to the temperature abnormality detecting circuit 44 as shown in Figure 5. This joint connection portion is housed in a junction box (not shown in the drawings).

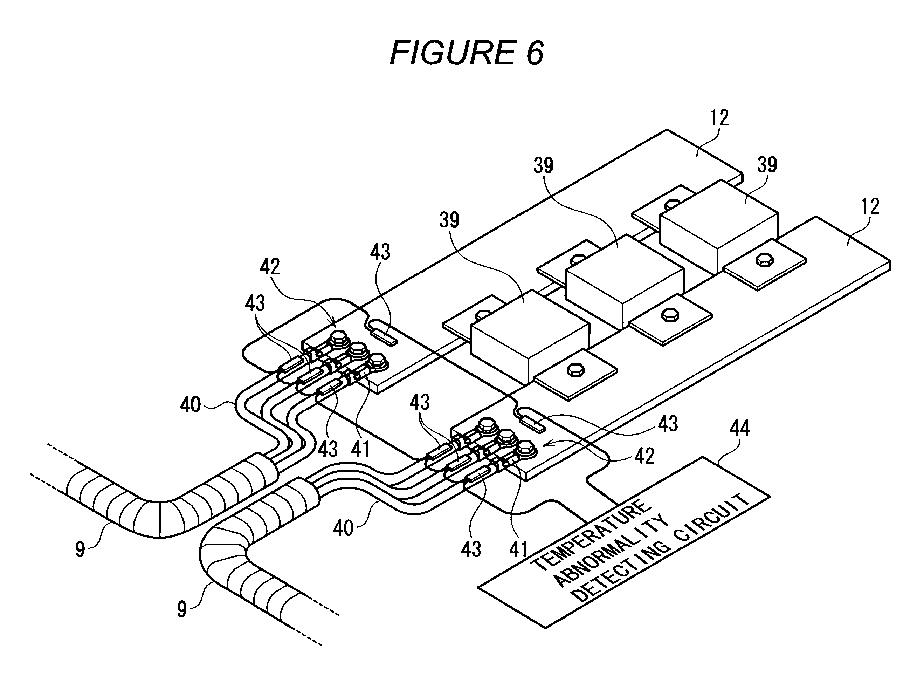

Figure 6 shows the case in which capacitors 39 compensating for the self-inductance of the feeding cable 9 are interposed in the middle of the feeding cable 9 in series; Figure 6 further shows how the feeding cables 9 are connected to the output bus bar 12 and how the temperature sensor is mounted which detects a temperature abnormality in the vicinity of the connection between the feeding cable 9 and the output bus bar 12. The capacitors 39 are connected between the two output bus bars 12. The feeding cable 9 is cut, and ends of the resulting feeding cables 9 are connected to respective output bus bars 12. The method for executing the termination process on each Litz wire 40, constituting the feeding cable 9, and the method for fixing the Litz wire 40 to the output bus bar 12 are the same as those in the case of Figure 4.

The portion in which a temperature abnormality is likely to occur is the same as that in Figure 4. Accordingly, also in the present embodiment, the thermostat 43 is mounted at the end of each Litz wire 40 which is closer to the crimping terminal 41 and at the position on each output bus bar 12 which is close to the screw clamp portion 42. The NC contact, which becomes nonconductive at at least the given temperature, is used as each of the thermostats 43. The thermostats 43 are connected together in series so as to input signals to the temperature abnormality detecting circuit 44 as shown in Figure 6. This joint connection portion is housed in a junction box (not shown in the drawings).

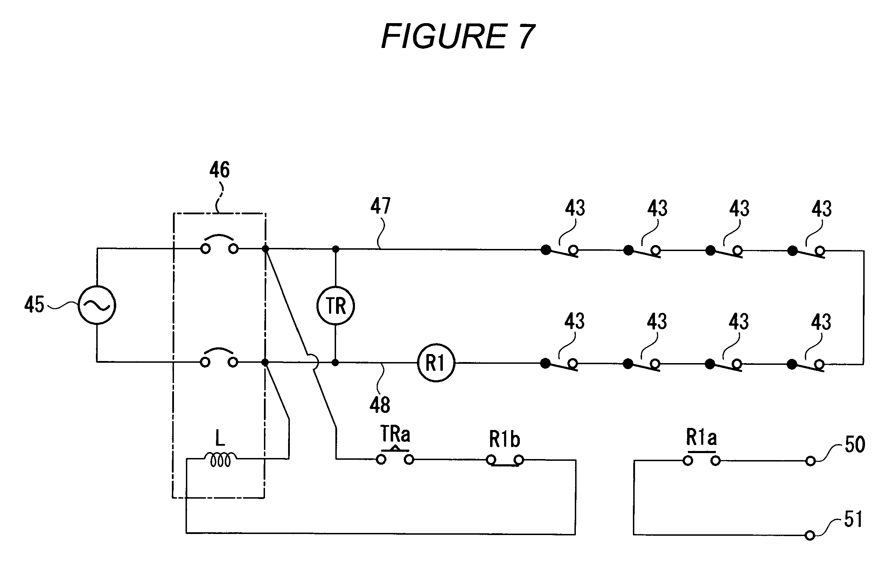

Now, the configuration of the temperature abnormality detecting circuit 44 will be described. Figure 7 shows an example of the configuration. The plurality of thermostats 43 mounted at the connection are all connected together in series, with a relay R1 connected in series with the thermostats 43. The opposite ends of the thermostats 43 and relay R1 are connected to a secondary side of a wiring circuit breaker 46 via power supply lines 47, 48. A primary side of the wiring circuit breaker 46 is connected to a commercial power source 45. A delay timer TR is further connected between the power supply lines 47, 48. The wiring circuit breaker 46 comprises a trip coil L connected in series with an (a) contact (make contact) TRa for the delay timer TR and a (b) contact (break contact) R1b for the relay R1, and the opposite ends of the series connected trip coil L and contacts TRa and R1b are connected to the power supply lines 47, 48. An a contact R1a for the relay R1 is connected to external output terminals 50, 51 as a temperature abnormality detection signal.

In this circuit configuration, turning on the wiring circuit breaker 46 while the temperature is normal allows the commercial power source 45 to supply control power to between the power source lines 47, 48. This immediately excites the delay timer TR, which starts operation. The a contact TRa remains open until the time set for the delay timer TR is up, and is then short-circuited. A short time is set to elapse until the time set for the delay timer TR is up.

Since the temperature is normal, the plurality of series connected thermostats 43 are all short-circuited. Thus, simultaneously with the start of the supply of the control power, the relay R1 is excited to open the b contact R1b, while short-circuiting the a contact R1a. The (a) contact R1a for the relay R1 is short-circuited to output a short-circuit contact signal meaning the temperature normality, to between the external output terminals 50, 51. The trip coil L in the wiring circuit breaker 46 is kept unexcited until the time set for the delay timer TR is up because the (a) contact TRa for the delay timer TR is open. When the time set for the delay timer TR is up, the (a) contact TRa is short-circuited. However, the trip coil 1, is kept unexcited because the (b) contact R1b for the relay R1 is open.

During such a continuous normal state, where any of the thermostats 43 exhibits at least a predetermined temperature, the corresponding contact is opened. Then, the relay R1 becomes unexcited to close the (b) contact R1b. The trip coil L is then excited to trip the wiring circuit breaker 46. The tripping stops the supply of the control power to between the power supply lines 47, 48, making the relay R1 unexcited. The (a) contact R1a for the relay R1 is opened to output an open contact signal meaning a temperature abnormality, to between the external output terminals 50, 51, which output the temperature abnormality detection signal. The tripped wiring circuit breaker 46 maintains the tripped state unless the wiring circuit breaker 46 is manually recovered to the normal state. That is, information indicating the occurrence of a temperature abnormality is stored (held) in the wiring circuit breaker 46. The open contact signal meaning a temperature abnormality has been input to the power supply device 8, which thus stops the feeding of current through the feeding cable 9. The current supply is stopped to prevent the possible melting of the insulating coating of the feeding cable 9 and the possible occurrence of fire.

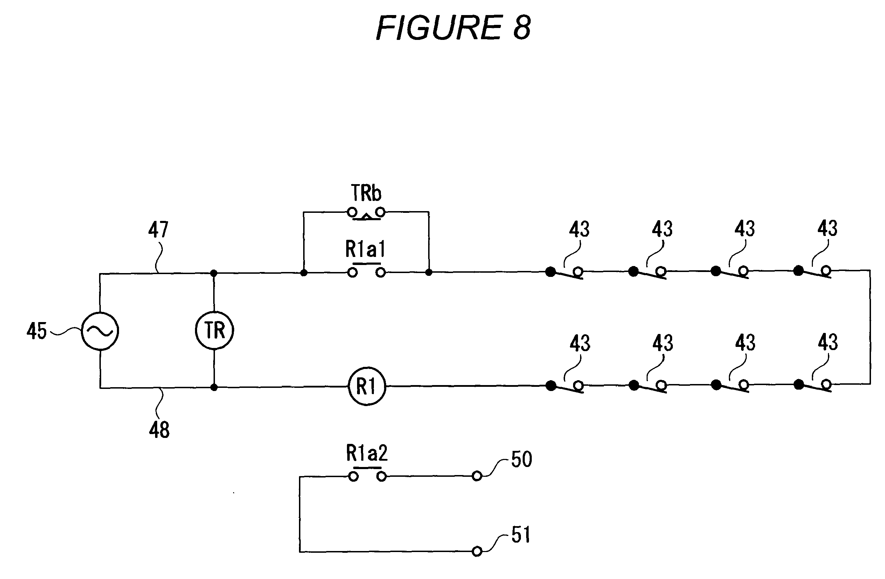

Figure 8 shows another example of the configuration of the temperature abnormality detecting circuit 44. In the circuit configuration, a parallel circuit including the (b) contact TRb for the delay timer TR and the first (a) contact R1a1 for the relay R1 is connected in series with the series circuit including the plurality of thermostats 43 and relay R1 mounted at the connection. Then, the delay timer TR is connected in parallel with the entire circuit including the parallel circuit and the series circuit. The opposite ends of the delay timer TR are supplied with the control power from the commercial power source 45. A second a contact R1a2 for the relay R1 is connected to the external output terminals 50, 51 as the temperature abnormality detection signal.

With the above circuit configuration, while the temperature is normal, the supply of the control power to the power supply lines 47, 48 immediately excites the delay timer TR, which starts operation. The (b) contact TRb remains closed until the appropriate time is up. Consequently, the relay R1 is also immediately excited through the (b) contact TRb for the delay timer TR and the series connected circuit of the thermostats 43. Exciting the relay R1 closes the first (a) contact R1a1 for the relay R1. This allows the relay R1 to be self-held even after the time set for the delay timer TR is up to open the (b) contact TRb for the delay timer TR. A short time is set to elapse until the time set for the delay timer TR is up. Self-holding the relay R1 closes the second (a) contact R1a2 for the relay R1 and allows the short-circuit contact signal meaning a temperature normality to be output to the external output terminals 50, 51.

During such a continuous normal state, where any of the thermostats 43 exhibits at least the predetermined temperature, the corresponding contact is opened. This makes the relay R1 unexcited to open the first (a) contact R1a1 for the relay R1, while canceling the self-holding of the relay R1. Making the relay R1 unexcited also opens the second (a) contact R1a2 for the relay R1 and allows the open contact signal, meaning a temperature abnormality, to be output to between the external output terminals 50, 51. Upon receiving the output, the power supply apparatus 8 stops the feeding of the current through the feeding cable 9. This prevents the possible melting of the insulating coating of the feeding cable 9 and the possible occurrence of fire. The time set for the delay timer TR has already been up, and the (b) contact TRb for the delay timer TR remains open. Consequently, even if the temperature returns to the normal value to close the contacts for all the thermostats 43, the relay R1 remains unexcited. That is, information indicating the occurrence of a temperature abnormality is stored (held) in the relay R1. To recover the operation of the circuit, the supply of the control power is stopped and then restarted.

As described above, in the non-contact electricity feeding facility 7 in accordance with the present embodiment, the thermostat, the temperature sensors, is mounted in the vicinity of the connection between the feeding cable 9 and the bus bar 12, where a temperature abnormality is likely to occur. The temperature abnormality detecting circuit 44 monitors the thermostat 43 for operation and holds (stores) information indicating the occurrence of a temperature abnormality. The thermostat 43 performs a reversible operation and can thus advantageously perform repeated detections. Further, the fact that a temperature abnormality has occurred is stored (held) in the wiring circuit breaker or the relay. This allows the site of the temperature abnormality to be easily located.

Moreover, information indicating that a temperature abnormality has occurred is output by the relay contact. Accordingly, by stopping the output of a high frequency current from the power supply apparatus on the basis of an output from the relay contact, it is possible to prevent the possible melting of the insulating coating of the feeding cable and the possible occurrence of fire.

While the present invention has been described with respect to preferred embodiments thereof, it will be apparent to those skilled in the art that the disclosed invention may be modified in numerous ways and may assume many embodiments other than those specifically set out and described above. Accordingly, it is intented by the appended claims to cover all modifications of the present invention that fall within the true spirit and scope of the invention.

## Claims

1. A non-contact electricity feeding facility that feeds electricity to a rail guided vehicle in a non-contact manner via a feeding cable laid along a traveling track, the facility being **characterized by** comprising a thermostat mounted at an end of the feeding cable at a connection between the feeding cable and a bus bar for junction or termination which is required for feeding electricity, the thermostat operating at at least a predetermined temperature, and a temperature abnormality detecting circuit that detects that the thermostat has operated.

2. A non-contact electricity feeding facility according to Claim 1, **characterized in that** the thermostat operating at at least the predetermined temperature is also mounted on a bus bar side to which the feeding cable is connected.

3. A non-contact electricity feeding facility according to Claim 1, **characterized in that** the thermostat used is of a type that performs power interrupting operation at at least the predetermined temperature and a plurality of the thermostats are mounted by being connected together in series, and **in that** the facility has a temperature abnormality detecting circuit that detects that at least one of the thermostats has performed the power interrupting operation.

4. A non-contact electricity feeding facility according to Claim 1, **characterized in that** the temperature abnormality detecting circuit comprises a circuit that holds information indicating that any of the thermostats has operated.
